# EUROPEAN PATENT SPECIFICATION

(11) **EP 3 847 097 B1**
(45) Date of publication and mention of the grant of the patent: **07.06.2023**
(21) Application number: 19780036.0
(22) Date of filing: 05.09.2019
(51) Int. Cl.: B64C 33/02, B64C 39/02, A63H 27/00

(54) **ROBOTIC BIRD**
ROBOTISCHER VOGEL
OISEAU ROBOTISÉ

(30) Priority: 07.09.2018 IS 9102
(43) Date of publication of application: 14.07.2021
(73) Proprietor: FLYGILDI EHF., 101 Reykjavik (IS)
(72) Inventor: HARDARSON, Hjalti, 101 Reykjavik (IS)
(74) Representative: Arnason Faktor
(86) International application number: PCT/IS2019/050011
(87) International publication number: WO 2020/049600

(56) References cited:
- WO-A2-2008/125868
- CN-A- 106 347 660
- CN-A- 107 226 208
- GB-A- 289 829
- US-B1- 7 607 610

## Description

### Field of the invention

The invention provides a robotic bird that uses flapping flight for lift and propulsion. Furthermore, the present invention provides a robotic bird where the wings can be easily removed or replaced in case they become damaged or need repair.

### Background

Several flapping wing devices have been developed, especially by universities, for example, the Delft University of Technology. Other devices are in the development phase, for example, the Smart Bird by the company Festo and Robur by the Institut des Systèmes Intelligents et Robotique in France. Most of these devices use a simple free running mechanism that moves the wings up and down, sometimes also twisting the wing on the up and down strokes. This is the case for the Smart Bird, which moves the wings along a pre-defined fixed pattern. The Robur bird flaps its wings continuously but can also set the tilt angle. Many other flapping-wing devices have been built at various locations, most of them focusing on very small devices, the size of a hummingbird, see for example the AeroVironment hummingbird in the U.S.A. These simple mechanisms limit the efficiency, capabilities and manoeuvrability of these devices.

The novelty of the Silent Flyer lies in the design of the bird-like flapping wings and tail, which can be categorized as controllable flexible structures. The wings have four degrees of freedom each, i.e. for flapping, tilting, morphing and moving the wing back and forth. These motions are controlled in real-time and can be set at will within the limits of the mechanism. Generally, the mechanism allows an output of up to +/- 90 degrees for each of the above-mentioned motions. The wings are independently controlled and can also be folded to the body of the bird, which is advantageous during transport between operation sites. The tail has three degrees of freedom. The Silent Flyer does not sound much louder than a bird (less than 70 dB measured 1 m in front of the device). Should the wings or tail become damaged, they can be easily replaced on location. The Silent Flyer is non-obtrusive since it has the appearance of a flying bird. This will make it more acceptable to the public, for example, during surveillance by the police. The colour and texture of the feathers and body can be made to look like those of a local bird. The Silent Flyer is rainproof, which is an advantage in search and rescue operations and surveillance since these operations must be undertaken in all kinds of weather.

There are currently no comparable commercial products on the market. The wing and tail design described above, enables us to attempt to use evolutionary methods for teaching the device to fly. Evolutionary methods have been used in the development of robotic devices, such as walking machines but to our knowledge they have not been applied to flapping flight machines. However, an experimental set-up at Chalmers University of Technology used evolutionary methods for teaching a flapping wing mechanism to generate lift and forward motion, see "Creation of a Learning, Flying Robot by Means of Evolution" (Evolutionary Robotics, p. 1279).

US 2014/026382 discloses a wing flapping mechanism for a flying machine with a pair of opposite wing structures laterally projecting from a main frame a main frame extending along a longitudinal axis. The wing structures have a tri-axial shoulder joint where the proximal end of the shoulder joint is pivotally connected to a respective side of the main frame. The wing flapping mechanism uses a set of juxtaposed and interconnected torsion-inducing tubes coaxially disposed inside a corresponding set of juxtaposed and interconnected torsion-responsive tubes, where the alternating pivoting motion is transmitted between the torsion-inducing tubes regardless of a spatial orientation of the torsion-inducing tubes and of the torsion-responsive tubes.

WO 2008/125868 discloses a wing structure for an aircraft comprising an inboard spar pivotally mounted at an inboard end and an outboard spar pivotally coupled at one end to an outboard end of the inboard spar. A plurality of elongated, overlapping wing elements or winglets are attached at one end to a respective spar extending in the rear direction from each spar. Means for rotating the inboard spar relative to a fuselage or and for rotating the outboard spar relative to the inboard spar are provided as well as means for keeping the wing elements generally aligned together throughout a range of rotational positions of said inboard and outboard spars.

### Summary of the Invention

The present invention relates to a robotic bird that uses flapping flight for lift and propulsion. The bird has a body, two wings, tail and head with a beak in addition to onboard electronics and batteries. Each wing is controlled separately by four motors. One motor controls the flapping, one wing tilt (angle of attack), one the degree of morphing and folding of the wing and one the horizontal motion of the wing. The tail is controlled by three servomotors, one for up and down motion, one for tilting and one for spreading the tail feathers. Thus, the controlling parts of the bird has eleven degrees of freedom in total in the wings and tail. This design is the key for using evolutionary methods for

CN 106347660A proposes a flying machine described as "nano self-power-generation bionic flapping-wing air vehicle". The machine comprises nano self-power-generation bionic wings, a nano self-power-generation bionic tail wing, an intelligent controller, rechargeable batteries, sensors, a global positioning system, a signal receiving and transmitting device and a fuselage. Each of the wings and the tail wing comprises multi-joint driving rods; these multi-joint driving rods comprise wing arm front edge multi-joint driving rods, wing arm central pivot multi-joint driving rods and tail multi-joint driving rods. The multi-joint driving rods comprise joint drivers; each joint driver comprises a micro motor, a brake connection part and a pressure sensor module.

US 7607610B1 discloses a similar flying machine as in the preceding mentioned two documents but without tail feathers. The machine has segmented, flapping wings and is said to be capable of bird-like flight. A main drive system provides flapping motion to the wings. Servo systems are provided for independently moving each wing forward and backward along a major axis of the aircraft fuselage, thereby providing a balance subsystem. A single servomechanism controls upward and downward direction of the wings thereby providing a center angle control subsystem. Two additional servo systems are provided to control a tail assembly that provides steering and other ancillary control functions. Each subsystem is controlled by a dedicated, onboard microcontroller. teaching the bird to fly in a much more efficient way than has previously been possible. The wings closely resemble the wings of a real bird in appearance and motion. The wings can be moved up and down, change the tilt, move back and forth and in and out for morphing and folding the wing to the body of the bird. All these motions can be set to an arbitrary angle within the limits of the mechanics. The tail can be moved up and down, tilted and the feathers can be spread and folded. These wing and tail motions are controlled by high-speed servomotors, which in turn are controlled by individual positioning controllers that read the motor shaft positions and thus the position of the wings and tail.

Lift and propulsion is achieved by combination of the movements of the wings and tail. A typical forward propulsion of the bird is generated by the wings by a down-stroke of the wings combined with a downward tilt and forward horizontal motion of the wings. At the bottom of the down-stroke, the wings are tilted upward and moved backwards horizontally during the upstroke. The angle of attack of the wings is positive with respect to the forward motion of the wings. The limits of the wing stroke can be set to any value upwards and downwards within the allowance of the mechanics. The tail assists in the control of the bird by being moved up, down, tilted and by spreading the feathers. The bird is relatively quiet in operation since it uses no propellers. The bird is controlled onboard by a computer system, software, navigation system, including a GPS, gyro, compass and altitude sensors. An on-board communication system is used for receiving commands from a ground based control station and for sending data and information to the ground control station. The bird is powered by an energy source such as a battery. The wings are made of artificial feathers that can be printed in plastic on a 3D printer or injection moulded in plastic or a material with similar properties. The wing motions are controlled by an on-board computer running control software which continuously sends data on wing motion to servomotor positioning controllers which in turn control precision servomotors equipped with shaft encoders. The wings are independently controlled as there are are separate motors for each wing. The wings are independently morphed, i.e. their size can be set to any value from being fully stretched out to being folded to the body of the bird. Thus, the wings can move freely in three-dimensional space in a similar way to a robotic arm. The wing motions are necessary for enabling the artificial bird to fly and manoeuvre in an efficient way and it allows the use of evolutionary methods for generating the flight patterns, i.e. for teaching the artificial bird to fly. In addition, the wing design of the present invention allows the artificial bird to take off from standstill and land without a runway. Since the wings can be moved back towards the tail and folded, the "bird" can be instructed to dive in a similar way to some seabirds, for example, the Gannet, provided that the flying machine or its major components are waterproof.

The invention disclosed herein differs from prior art wing designs and flying machines in that the unique winglet design comprises two plates, where each winglet can partially slide into and out of an adjacent winglet during folding and stretching the wing. Furthermore, the present wing design maintains an airfoil shape of the wing due to the wing design such that the secondary feathers will be directed along the direction of the airflow irrespective of the horizontal position of the wings or the degree of morphing of the wings. This means that with all the different positions of the wing possible due to rotational possibilities, the secondary winglets (secondary feathers) are maintained along the direction of the airflow by levers or beams. (In comparison, although prior art document WO 2008/125868 has intermediate feathers between the winglets to cover the gap between each winglet during stretching, the wing design therein cannot maintain the direction of the winglets along the direction of the airflow at all times during the flapping motion.) The flying machine of the present invention is designed as modular construction, which means that all major components are replaceable for either, maintenance, repair or to alter the appearance of the device.

The electrical system of the bird consists of a computer, software, altitude sensors, navigation system, communication system, energy source, several servomotors and corresponding servomotor positioning controllers, one or more cameras and other sensors, such as environmental sensors.

In one aspect the flying machine comprises a) a main body further comprising controllers and motors for moving movable parts of the flying machine; b) opposite wings pivotally coupled and independently controlled, extending from the main body, each wing further comprising three main parts, said main parts being: i) an innermost part corresponding to the humerus of a wing, ii) a middle part corresponding to the radius and ulna of a wing, and iii) the outermost part corresponding to the metacarpus, basal phalanx and the terminal phalanx of a bird's wing. Each wing further comprising primary, secondary and tertiary feathers (tertials) supported by the three main parts of the wing. The flying machine further comprises c) a head section, and d) a tail section having tail feathers on a tilting joint for moving the tail up and down, tilting the tail and spreading the tail feathers. Each wing of the robotic bird is connected to and controlled separately by four motors, wherein: i) a first motor controls the flapping of the wings, ii) a second motor controls the angle of attack (wing tilt), iii) a third motor controls the degree of morphing and folding of the wing, and iv) a fourth motor controls the horizontal motion of the wing. Furthermore, each primary and secondary feather is made from an upper plate and a lower plate giving the wing an airfoil transection and where levers or beams control the direction of the secondary feathers keeping them almost parallel to the body of the bird and along the direction of the airflow. The tail section is controlled by three motors, wherein; i) one motor controls the up and down motion, ii) one motor controls the tilting; and iii) motor controls the spreading of the tail feathers. Furthermore, actuators, levers or beams keep the secondary feathers in line with the body irrespective of the degree of folding.

Each wing is composed of three main parts: a) the innermost part that corresponds to the upper arm of the wing or humerus, b) the mid part that corresponds to the forearm or radius and ulna and c) the outermost part that corresponds to the fingers or hand of a bird's wing. Thus this design mimics the bone structure of a bird's wing. Each of these parts of the wing has winglets that resemble feathers of a bird wing. The three main parts of the wing are supported by hollow glass fibre rods for increased strength. Two or more servomotors are attached to the "upper arm" of the bird. In the embodiments shown herein, two motors are used. One motor controls the morphing and folding of the wing, while the other motor controls the horizontal position of the wing, i.e. the back-forth motion and takes part in folding the wing. Two motors are located inside the body of the bird for each wing. One of these motors controls the flapping of the wing or the wing stroke and the other controls the angle of attack i.e. the tilt of the wing. The up and down stroke of the wings can be set to different values from one another. Thus, the upstroke can be set to, for example, 60 degrees up and the down stroke to, for example, -10 degrees, where 0 degrees represents horizontal. All wing and tail motions are controlled in real time by the onboard computer and software system. The evolutionary method used for teaching the bird to fly continuously modifies and sets the values for wing and tail motion.

The wing and feather system is designed in such a way that the secondary feathers are aligned with the body of the bird and the in direction of the airflow, irrespective of the horizontal position of the wing.

The wings are fixed to the body of the bird by a single screw and two or more electrical connectors, one or more for each motor located in the wing. Thus, the wings can be easily removed or replaced in case they become damaged.

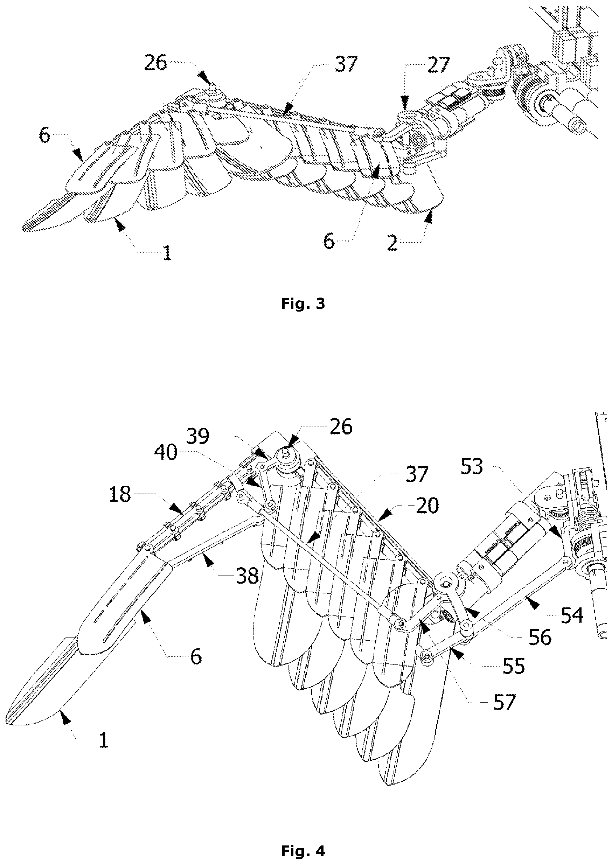

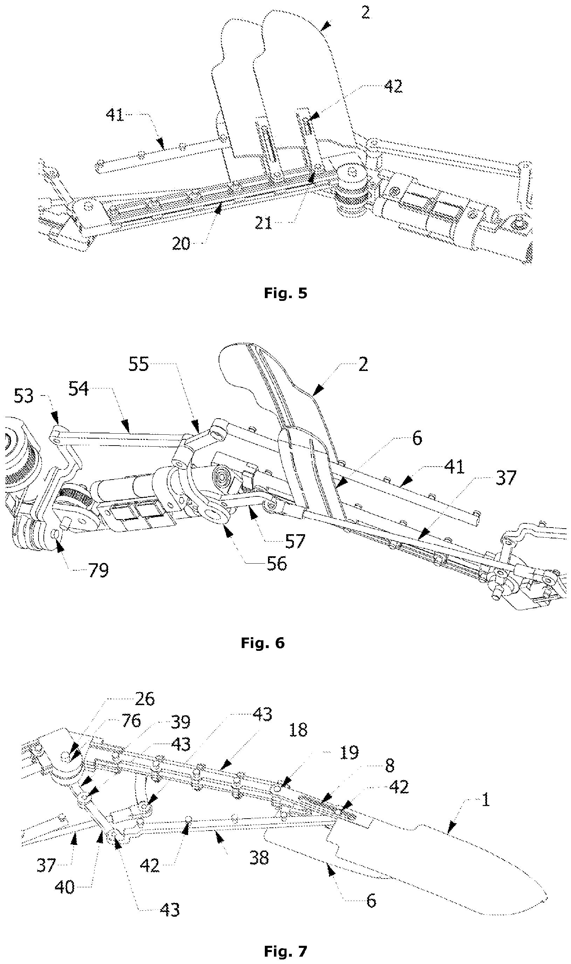

The present invention differs from models of robotic birds and improves on them in that: i) the feathers have an upper and lower plate forming a cross section in a similar shape to that of the wings of birds where the arrangement of the winglets provide a shape of the wing forming a cross section of the wing in a similar shape to that of the wings of birds having an airfoil transection with a leading edge and a trailing edge. Furthermore, the cross section can be altered to resemble many NACA wing profiles; ii) the wing and feather design allows the wings to be folded, maintaining the alignment of the secondary and tertial feathers in the direction of the airflow all the way from a fully stretched wing to the folded wing (this is demonstrated in Figs. 3 and 4); iii) the wing and feather system keeps the secondary feathers aligned to the body of the bird and along the direction of the airflow irrespective of the horizontal position of the wings (this is demonstrated in figure 4 and 6 (parts no. 53, 54, 55 and 56); iv) the wings can be easily removed or replaced by loosening a screw or in any way a detachment at the shoulder joint and a single feather can be easily removed in case of damage and replaced with a new one; v) the wings can move independently of each other by means of separate motors for each wing; vi) the wings can move back and forth in a horizontal plane, facilitating the capability of diving or plunging into the sea in the same manner as some seabirds do; vii) the wings can fold to the body of the artificial bird, facilitating transport as the wing and feather design allows the wings to be folded such that an outer feather slides under the inner one; viii) the head can be moved up, down and sideways and the beak can open and close for grabbing small items; ix) the wing tip position can take on an arbitrary position in three-dimensional space, i.e. up or down, in and out, back and forth in addition to tilting the wing, which can also be set to an arbitrary angle of attack within the limits of the mechanics; x) the speed and acceleration of the motors that control wing motions can be set in real-time to run at various speed and acceleration settings; xi) the operating system controls the flapping frequency and flapping duty cycle in real-time; xii) the operating system can stop the wings at any position and start wing motion at any position within the limits of the mechanics; xiii) the bird is relatively quiet, non-obtrusive and can be camouflaged to look like a local bird for stealth operation

It is an object of the present invention to overcome or ameliorate the aforementioned drawbacks of the prior art and to provide an improved and/or alternative and/or additional robotic bird or flying machine in the shape of a bird and having the capacity to fly like a bird. It is one preferred object of the present invention to provide a robotic bird with feathers having shape such that the wing will have an airfoil transection irrespective of if the wing is fully stretched or folded to the body of the bird. In one preferred object of the present invention winglets are made from an upper plate and a lower plate creating an airfoil transection of the wing during flying. Moreover, it is a preferred object of the present invention to provide a robotic bird where the wings of the bird and the tail are independently controlled. In one preferred object of the present invention a method is provided for flying the flying machine of the invention where the wings are independently morphed and can move freely in three-dimensional space.

The object(s) underlying the present invention is (are) particularly solved by the features defined in the independent claims. The dependent claims relate to preferred embodiments of the present invention. Further additional and/or alternative aspects are discussed below.

In the present context the terms "robotic bird" and "flying machine" both refer to a flying device or machine having the shape and outer appearance of a bird. Such a device has a main body, wings, tail and head with artificial feathers attached to the wings.

In the present context each motor can be controlled separately and in co-ordination while in flight to keep the bird airborne and at a certain speed and direction. This enables precise wing control in any manner but more importantly it is possible to control the wings' motion and size in a three-dimensional space while flapping is underway and especially in accordance with the wings' position at each instant.

In the present invention each wing is connected to and controlled separately by four motors, wherein i) a first motor controls the flapping of the wings, ii) a second motor controls the angle of attack (wing tilt), iii) a third motor controls the degree of morphing and folding of the wing, and iv) a fourth motor controls the horizontal motion of the wing.

In an embodiment of the present invention each primary and secondary feather is made from an upper plate and a lower plate giving the wing an airfoil transection shape and where levers (see items 53, 54, 55 and 56) control the direction of the feathers keeping the secondary feathers parallel to the body of the bird and along the direction of the airflow.

In an embodiment of the present invention each tail feather is made from an upper plate and optionally also a lower plate.

In an embodiment of the present invention each primary, secondary, tertiary and tail feather is made from an upper plate only, wherein the transection of the wing assembly gives the wing an airfoil transection shape.

In an embodiment of the present invention the motors are controlled by an on-board computer system running the control software which controls the wing and tail motions, communications, sensors etc. Furthermore, on-board batteries and optionally solar cells power the system.

In an embodiment of the present invention the feathers on the wings are artificial feathers that have an upper and lower plate that allows them to be folded into the adjacent feather and spread out from it again.

In an embodiment of the present invention the tertiary feathers are made of a cloth that can stretch or artificial feathers.

In an embodiment of the present invention the wings and the feathers are designed to allow the wings secondary feathers to be aligned to the body of the bird and thereby in the direction of travel, where the upper and lower plates of the secondary feathers maintain their position all the way from a fully stretched wing to the folded wing.

In an embodiment of the present invention the tail section is controlled by three motors, wherein i) one motor controls the up and down motion, ii) one motor controls the tilting; and iii) motor controls the spreading of the tail feathers.

In an embodiment of the present invention the motors are servomotors or other electrical motors.

In an embodiment of the present invention the motors are controlled by an on-board computer system running a control software which controls at least the wing and tail motions, communications and sensors.

In an embodiment of the present invention on-board batteries or solar cells power the system.

In an embodiment of the present invention the servomotors along with positioning controllers for wing and tail control allow the wings and tail to move at a given speed and acceleration to a certain given position that can be varied in real-time by the on-board software operating system.

In an embodiment of the present invention the first motor controlling the flapping of the wings and the second motor controlling the angle of attack (wing tilt) are controlled separately.

In an embodiment of the present invention the wings can be independently morphed, i.e. their size can be set to any value from being fully stretched out to being folded to the body of the bird. Therefore, the wings can move freely in three-dimensional space in a similar way to a robotic arm. Such wing motions are necessary for enabling the artificial bird to fly and manoeuvre in an efficient way.

In an embodiment of the present invention the design has 11 degrees of freedom (DOF) and allows the use of evolutionary methods for teaching the artificial bird to fly.

In an embodiment of the present invention the software of the robot bird keeps track of the wing and tail position at each instant/moment.

In an embodiment of the present invention the wing flapping and wing tilting (wing angle of attack) is controlled by two electric motors inside the body of the robotic bird for each wing.

In an embodiment of the present invention the motors of the robot bird have shaft encoders and are controlled by servomotor positioning controllers so that they can be moved in a precise way, for example, it is possible to make them move to a specified position or angle and maintain that position as well as to control their acceleration and velocity. Therefore, it is possible to start wing flapping in any position and end it in any position desired within the limits of the mechanism and to control the speed and acceleration of the motors.

In an embodiment of the present invention the electrical system of the flying machine further comprises attitude sensors, communication system, energy source, one or more cameras and other sensors, such as environmental sensors and navigation system such as GPS, INS, gyro and compass.

In an embodiment of the present invention the flying machine further comprises one or more computing devices for allowing the flying machine to learn new flying patterns.

In an embodiment of the present invention the up-stroke and down-stroke of wing flapping can, for example, be set to arbitrary values within the limits of the mechanism.

The feathers can be printed by a 3D printer, and be made in several ways by, for example, but not limited to changing their length and shape.

It is possible to increase or decrease the size of the feathers. The shape of the feathers can be altered in several ways, i.e. it is possible to replace the feathers without changing the design of the wing structure or its function. Thus, it is possible to mimic the appearance of a real bird, by changing the colour, texture, size and shape of the feathers. Each feather can be easily removed and replaced in case it become damaged.

### Description of drawings

The present invention will become more fully understood from the detailed description given hereinafter and the accompanying drawings which are given by way of illustration only, and thus, are not limitative of the present invention, and wherein:
Fig. 1 is an overview of the bird, showing both wings, the body, head and tail.
Fig. 2 outlines the composition of the wings.
Fig. 3 is a view of the right wing seen from below.
Fig. 4 is a view of a half-extended wing seen from below.
Fig. 5 shows the arrangement for fixing and folding the Secondary feathers.
Fig. 6 is a view below the right wing showing the actuators used for moving the wing and feathers in and out.
Fig. 7 shows the Fingers part of the right wing.
Fig. 8 is a view of a primary feather seen from above.
Fig. 9 shows a secondary feather and its lower plate.
Fig. 10 is a view of a secondary feather seen from below.
Fig. 11 is a front view of a secondary feather.
Fig. 12 is a view of the right wing from behind the bird.
Fig. 13 is a view of the forearm (20) part of the Wrist joint seen from below.
Fig. 14 shows the finger's part of the wrist joint.
Fig. 15 shows the Tail Module attached to the inside frame of the bird seen from above.
Fig. 16 shows the Tail module of the bird in detail.
Fig. 17 shows the Tail-tilting mechanism inside the frame of the bird.
Fig. 18 shows the servomotor assembly of the right wing consisting of four motors.
Fig. 19 outlines the wing-flapping motor and the wing-tilting motor.
Fig. 20 shows the motors of the right wing exposed.
Fig. 21 shows a transection of a winglet or feather.

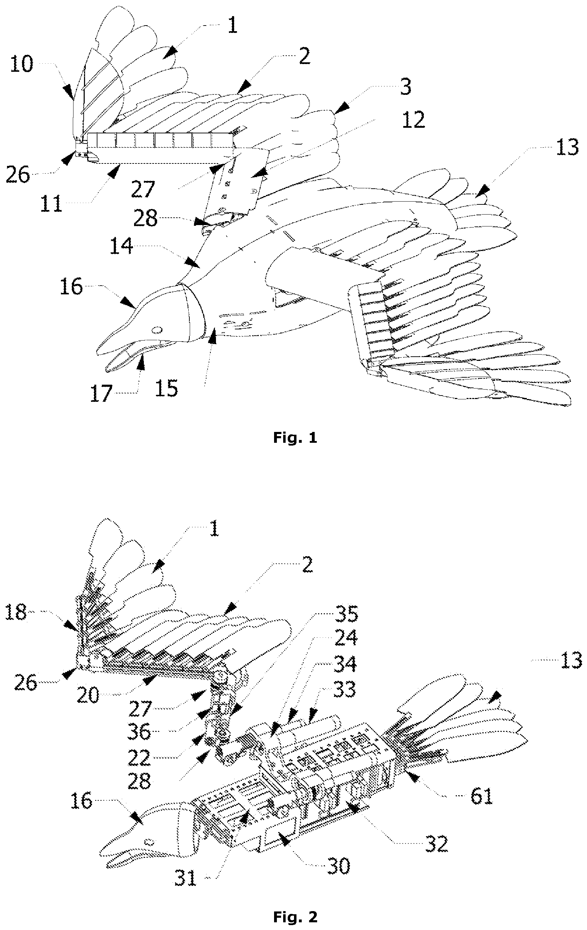

Figure 1 is an overview of the bird, showing both wings, the body, head and tail. The figure shows the Primary feathers (1), the Secondary feathers (2), and the Tertials (tertial feathers) (3) or innermost feathers of the right wing. While the primary and secondary feathers can be printed using a 3D printer, the tertials can be made of a cloth that can stretch. This closes the gap between the Secondary feathers and the body of the bird. The body is composed of two shells (14) and (15), which cover the internal electronics and batteries. Tail feathers (13) take part in controlling the flight of the bird along with the wings. The tail can be moved up and down, tilted and the feathers can be spread and folded. The tail motions are controlled by three motors. The head (16) can be moved up and down and sideways by two motors. The lower beak (17) of the head can be opened and closed by a third motor. Rotating joints are located at the intersection of the three wing parts, i.e. Shoulder-joint (28), Elbow-joint (27) and Wrist-joint (26). Covers (10), (11) and (12) form a streamlined leading edges and also protect the feathers of the Fingers, Forearm and Upper arm. The leading edges can be slid off in case of damage or if a feather has to be replaced.

The embodiment of the wing shown in Fig.1 has six feathers on the forearm, five on the fingers and a cloth or foil on the upper arm resembling tertiary feathers, closing the gap between the body of the bird and the forearm of the wing. A different number of feathers can be used without modifying the design or function of the wing.

Figure 1 shows how the wings are composed of three main parts: a) the innermost part that corresponds to the Upper arm or humerus of a bird, b) the mid part that corresponds to the Forearm or radius and ulna of a bird and c) the outermost part that corresponds to the Hand or Fingers (Digits) of a bird's wing. This design mimics the skeletal system of a bird such as a seagull. Each of these parts of the wing have winglets that correspond to feathers of a real bird's wing. The size of the wings can be changed (morphed) as is the case for the wings of birds and they can be folded up to the body of the bird in a similar way as birds can. The winglets or feathers are made of plastic and can be printed using a 3D printer. The figure shows the Primary feathers (digits or fingers) (1); the Secondary feathers (2); Upper arm (22); the Tail with feathers (13); and the battery compartment (30). The drawing further shows the Positioning controllers (32) for the servomotors; the servomotor assembly inside the body (24), consisting of the Wing-flapping motor (33) and the Wing-tilting motor (34); the Shoulder-joint (28); the Elbow-joint (27), the Wrist joint (26); beam (18) holding the Primary feathers (1); beam (20) for holding the Secondary feathers (2); the wing-motor assembly of the wing, for wing-morphing and back-forth motion of the wing, motors (36) and (35); the Tailhinge (61); the head (16) and the electronics compartment (31). Streamlined leading edges (not shown) are attached to the beam (18), beam (20) and upper arm of the wing. These leading edges also protect the feathers.

Figure 2 shows how the feathers fold together. The feathers are slightly tilted so that an outer feather may more easily fold under the next inner feather. In addition, this arrangement closes the gap between the feathers on the down stroke and opens the gap on the up-stroke, thus reducing the power required to move the wing up. This is identical to the arrangement of the wings of real birds. The figure shows the Upper part of a Primary feather (1) and the Lower part (6) of a Primary feather. The fingers part of the wing, holding the Primary feathers, rotates around the wrist-joint (26). Primary rod (37) extends or retracts the fingers, thus spreading or folding the Primary feathers. The figure shows a Secondary feather (2) and the Lower plate of Primary and Secondary feathers (6). The Forearm and Fingers rotate around the elbow-joint (27).

Figure 3 shows a half-extended wing seen from below, where most of the primary feathers have been removed for clarity. The leading edges have also been removed, displaying how the feathers are attached to the beam (18) of the Fingers section and the beam (20) of the Forearm of the wing. The Primary rod (37) moves the beam (18) of the fingers in and out, and thus its feathers, in accordance with the Forearm (20). The Primary rod (37) is connected to the rod holder (57), which is fixed to the Upper arm. The primary feathers therefore fold or extract when the rod (37) moves closer or further from the beam (20), in accordance with the wing when it is extended or folded.

Figure 4 shows how the Secondary feathers (2) are fixed to the beam (20) on the pins (21) on the upper and lower side of the beam (20) and rotate around this pin. The feathers are snapped in place on the pins. The pins (42) of the Secondary feather lever (41) fit into a hole on the Secondary feathers around which the feathers rotate when lever (41) is pulled in or pushed out when the wing is folded or extended.

Figure 5 shows the actuators used for moving the wing and feathers in and out. Items (53), (54), (55) and (56) are levers for moving the secondary feathers in and out and at the same time keeping them almost parallel to the body of the bird irrespective of the degree of wing-folding. Lever (53) is fixed to the shaft (79) of the worm wheel of the Wing-tilting motor and tilts along with the wing. Lever (54) rotates at the junction to lever (53) and also at the junction of lever (55) and lever (56). Lever (56) rotates freely around the elbow joint (27). Lever (55) rotates at the joint of Lever (54) and at the joint of the Feather lever (41).

Figure 6 shows how the Primary feathers (1) are attached to the beam (18) by snapping them onto the pins on the upper and lower side of the beam (18). The feathers rotate on these pins when the wing is extended or retracted. At the same time the pins (42) of the Primary feathers lever (38) slide along the grove (8) in the feathers, controlling the folding of the Primary feathers. The actuators (39) and (40) control the degree of spreading of the Primary feathers. Actuator (39) is fixed to the beam (20). Actuator (40) rotates freely at the juncture of Actuator (39) and at the juncture of the Primary feather lever (38).

Figure 7 shows the details of a Primary feather (1) and its Lower plate (6). The Fixing hole of feather (4) snaps on to the pins of the beam (18) of the fingers section. The pins of the Primary feather lever (38) slide inside the Feather slot (8) when the wing is folded or extracted thus folding or spreading the primary feathers. The figure also shows slot 76 for key to keep beam (39) fixed to the upper arm beam (20) and a rotating joint (43).

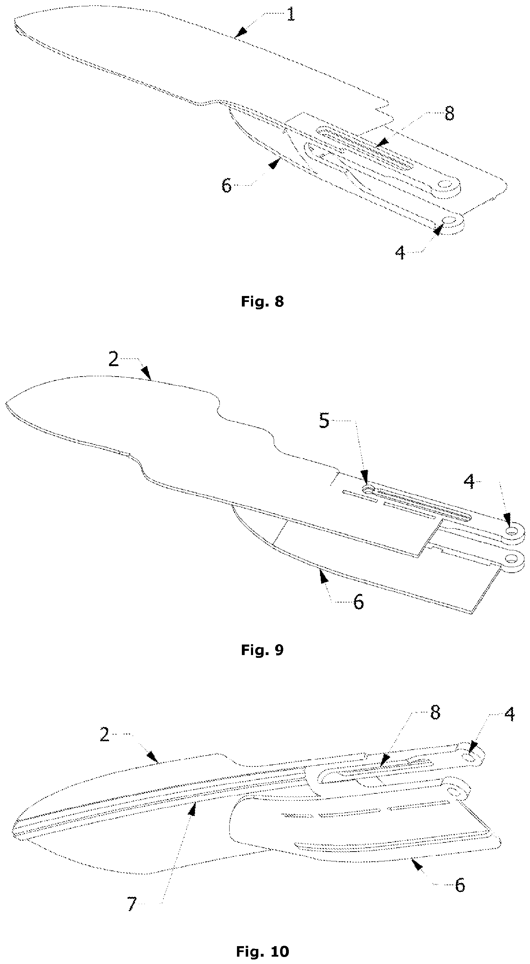

Figure 8 shows the details of a Secondary feather (2) and its Lower plate (6). The Fixing hole of feather (4) snaps on to the pins of the beam (20) of the Forearm of the wing. The Feather rotary hole (5) of the Secondary feather mates with the Feather lever pin (42) of the Secondary feather lever (41) enabling the Secondary feather to rotate freely on the pin as the feathers are spread or folded.

Figure 9 outlines the Secondary feather (2) from below. The drawing outlines the Lower plate (6) with a small supporting Feather rib on the underside for increased stiffness and strength. Supporting Feather ribs (7) on the underside of the Upper plate for increased stiffness and strength. Rotating joint for feather (4). The Primary and Tertial feathers also have the supporting ribs on their underside.

Figure 10 shows a Secondary feather (2) from the front. The Upper plate (2) is tilted inward to facilitate folding of the wing. The Lower plate (6) of the feather with supporting rib. The Primary and tertial feathers have an identical construction.

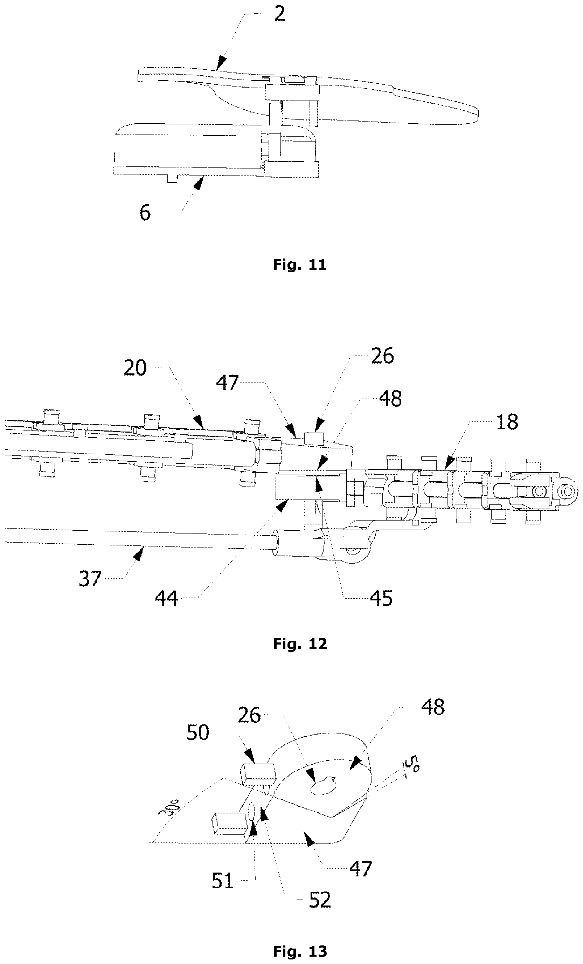

Figure 11 outlines the right wing from behind showing how the beam (18) of the Fingers, supporting the Primary feathers (not shown), is tilted with respect to the beam (20), supporting the Secondary feathers (not shown). This tilting enables the Primary feathers to fold under the Secondary feathers. The Primary rod (37) pulls the beam (18) in and out. Rotating surfaces (48) and (45) of the wrist joint (26).

Figure 12 shows the Forearm Sliding part (47) of the wrist (26) of the beam (20) from below, indicating the tilted Sliding surface (48); the Wrist joint (26); and the Mating surface (52) joining the beam (20) of the forearm. The drawing further shows holes (51) for carbon fibre tubes for stiffening the beam (20) of the Forearm and Tabs (50) for joining the part to the beam (20). The Sliding part (47) may also form a single unit with beam (20). The Sliding surface (48), marked with 30 degrees and 5 degrees, can take on other values.

Figure 13 outlines the Sliding part (44) of the wrist joint of the Fingers and sliding surface (45). See also Fig. 13 for further details.

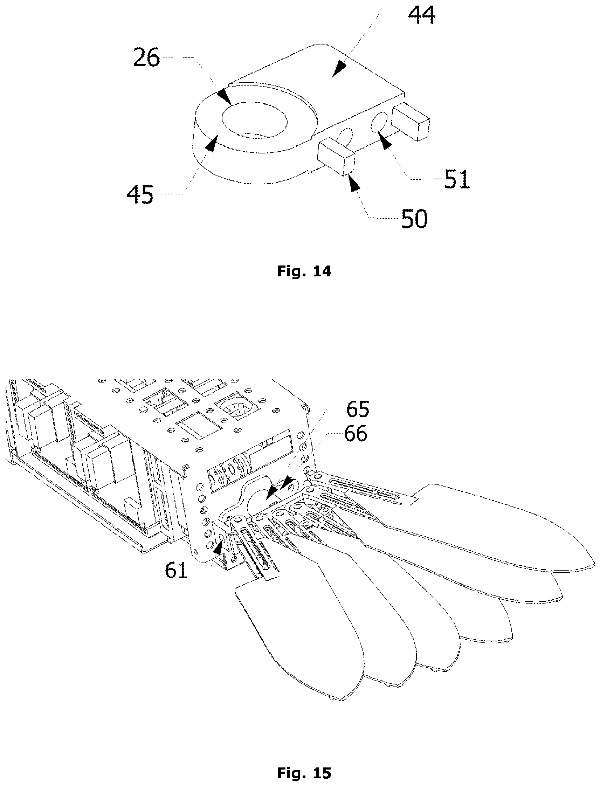

Figure 14 shows how the Tail module is fixed to the internal frame of the bird. The Tail hinge (61) on which the tail moves up and down and rotational joint for the tail (65) and (66).

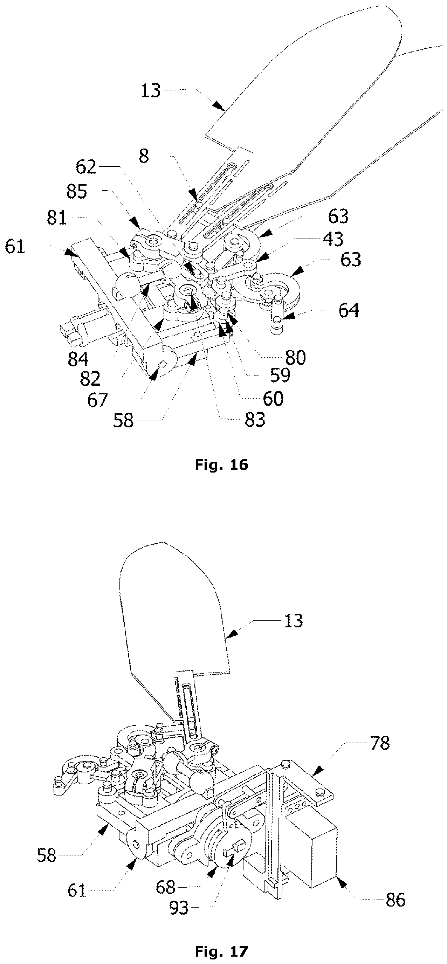

Figure 16 outlines the Tail module of the bird in detail seen from above. The drawing shows the Tail feathers (13) and the Tail crescent (58) holding the feathers in place by snapping them onto the Tail pins (59) of the Tail crescent (58). The feathers sit at different levels (60) on the Tail crescent (58) to facilitate folding the feathers such that an outer feather folds over an inner one. Folding and spreading of the feathers is controlled by a Servo motor (81) that pushes or pulls the Tail slider (62) in and out using the Servo horn (85). The Feather pins (64) slide along the Feather slot (8) of the tail feathers controlling the degree of spreading or folding of the feathers. The Tail is tilted up and down by the Servo motor (82). that rotates Servo horn (83), which in turn moves Servo lever (84) that pushes against the Tail hinge (61). The figure also shows levers (63) and 80 for moving tail feathers. Sideways motion is controlled by a servo motor inside the bird. See Fig. 17.

Figure 17 shows the tilting mechanism of the Tail module, which is located inside the body of the bird. Servo motor (86) acts on the Tail tilting horn (68) thus rotating the Tail module. Servomotor (86) is fixed to Servo motor holder (78), which in turn is fixed to the internal frame of the bird. The Tail module snaps onto the tilting mechanism using pins (93).

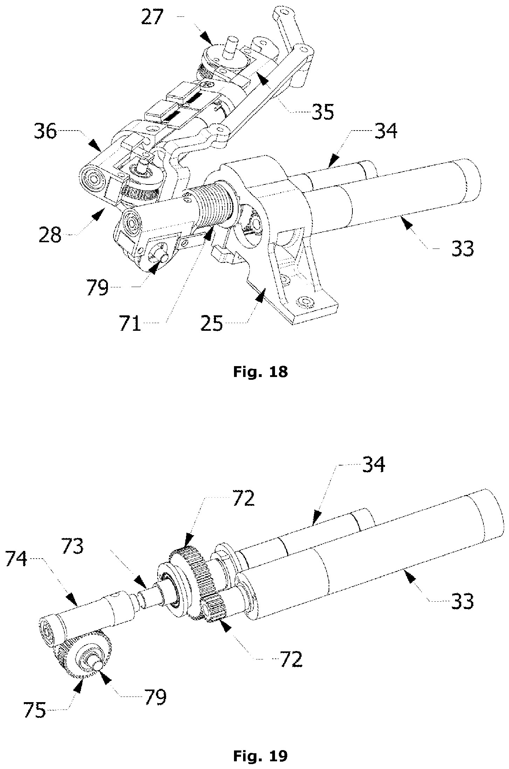

Figure 18 outlines the servomotor assembly of the right wing. The left-wing motor assembly is a mirror image of that of the right wing. The Wing-flapping motor (33) moves the wing up and down to an arbitrary angle set by the operating system of the bird and the corresponding servo motor positioning controller. Wing-tilting motor (34), controls the angle of attack of the wing by rotating the Shaft (79), onto which the wing is attached. Servo motor (36) moves the wing back and forth and also takes part in folding the wing. Servo motor (35) extends and folds the Forearm and Fingers part of the wing. The whole wing is folded or extended by using both servomotor (36) and servomotor (35). Motor housing (25) is attached to the frame inside the bird. Torsion spring (71) balances the wing in a horizontal position when power is not applied to the motors.

Figure 19 outlines the details of the Wing-flapping motor (33) and Wing-tilting motor (34). The Wing-flapping motor (33) has a spur-gear (72) fixed to its shaft. The Wing-tilting motor (34) has a mating spur gear (72) fixed to its body and thus rotates along with the Wing-flapping motor shaft when the wing moves up and down. The shaft (73) of the Wing-tilting motor (34) is fixed to a worm-gear (74), which tilts the wing by moving the worm-wheel (75) and the shaft (79) onto which the wing is attached. Since the wing-tilting motor moves along with the wing, wing-tilting is independent of the wing position during wing-flapping. The software controlling the wing-tilting therefore does not have to take into consideration the position of the wing when setting the value of wing-tilting as would have been the case if the wing-tilting motor did not rotate along with the wing-flapping motor. Thus, the wing tilting motor can operate faster when commanded to change the wing tilting. The motors are controlled by positioning servomotor controllers, which sense the position of the motor shafts and thus the position of the wing.

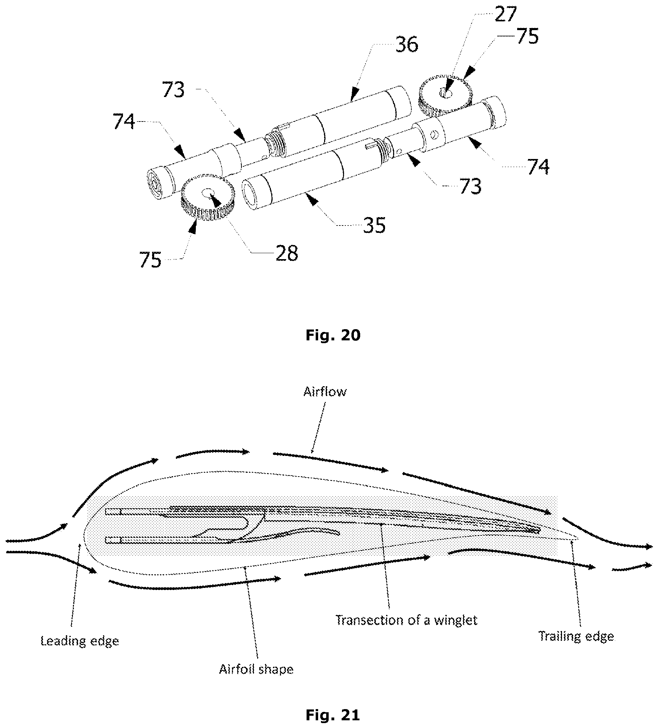

Figure 20 shows the motors of the right wing exposed. The motor housings have been removed for clarity. The shaft of the Wing-back-forth motor (36) is attached to a Worm-gear (74) that turns a Worm-wheel (75), which in turn rotates the wing at the Shoulder joint. This moves the wing back and forth but also participates in extending and folding the wing. The shaft of the Wing-folding motor (35) is also attached to a Worm-gear (74), which in turn rotates a Worm-wheel (75), which in turn rotates the Elbow-joint, folding or extracting the Forearm and Finger of the wing. The motors are controlled by positioning servomotor controllers, which sense the position of the motor shafts and thus the position of the win

Figure 21 shows a transection of a single winglet and how it resembles an airfoil transection. In fact, when a plurality of winglets are arranged side by side on the wing of the robotic bird of the present invention the wing will have an airfoil transection. The orientation of the winglets on the wing is controlled by beams and levers, such that they are directed along the direction of the airflow, or against the airflow if looking from the leading edge to the trailing edge.

As used herein, including in the claims, singular forms of terms are to be construed as also including the plural form and vice versa, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant). The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention.

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

## Claims

1. A flying machine comprising
- a main body further comprising controllers and motors for moving movable parts of the flying machine,
- opposite wings pivotally coupled and extending from the main body, each wing further comprising three main parts, said main parts being:
i) an innermost part corresponding to the humerus of a wing,
ii) a mid part corresponding to the radius and ulna of a wing, and
iii) the outermost part corresponding to the metacarpus, basal phalanx and the terminal phalanx of a bird's wing,
- each wing further comprising primary (1), secondary (2) and tertiary (tertials) feathers (3) supported by the three main parts of the wing,
- a head section (16),
- a tail section, which comprises tail feathers (13) on a tilting joint for moving the tail up and down, tilting the tail sideways and spreading the feathers,
**characterized in that** each wing is connected to and controlled separately by at least four motors, wherein:
i) a first motor controls the flapping of the wing,
ii) a second motor controls the angle of attack (wing tilt),
iii) a third motor controls the degree of morphing and folding of the wing, and
iv) a fourth motor controls the horizontal motion of the wing.

2. The flying machine according to claim 1, wherein each primary (1) and secondary feather (2) is made from an upper plate and a lower plate giving the wing an airfoil transection shape and where levers or beams control the direction of the secondary feathers keeping the secondary feathers parallel to the direction of the airflow.

3. The flying machine according to claim 1, wherein the feathers on the wings are artificial feathers that have an upper and lower plate that allows them to be folded into the adjacent feather and spread out from it again.

4. The flying machine according to claim 1, wherein the tertiary feathers are made of a cloth that can stretch or artificial feathers.

5. The flying machine according to claim 1, wherein the wings and the feathers are designed to allow the wings' secondary feathers to be aligned to the body of the bird and thereby in the direction of travel, where the upper and lower plates of the secondary feathers maintain their position, relative to the direction of travel, all the way from a fully stretched wing to the folded wing.

6. The flying machine according to claim 1, wherein the tail section is controlled by three motors, wherein i) one motor controls the up and down motion, ii) one motor controls the tilting; and iii) motor controls the spreading of the tail feathers.

7. The flying machine according to claim 6, wherein the motors are servomotors or other electrical motors.

8. The flying machine according to claim 6, wherein the motors are controlled by an onboard computer system running a control software which controls at least the wing and tail motions, communications and sensors.

9. The flying machine according to claim 7, wherein the servomotors and positioning controllers for wing and tail control allow the wings and tail to move at a given speed and acceleration to a certain given position that can be varied in real-time by the onboard software operating system.

10. The flying machine according to claim 6, wherein the first motor controlling the flapping of the wings and the second motor controlling the angle of attack (wing tilt) are controlled separately.

11. The flying machine according to claim 1, wherein the motors of the flying machine comprise shaft encoders being read by servomotor positioning controllers.

12. The flying machine according to claim 1, wherein the electrical system of the flying machine further comprises attitude sensors, communication system, energy source, one or more cameras and other sensors, such as environmental sensors and navigation system such as GPS, attitude sensors, gyro and compass.

13. The flying machine according to claim 1, wherein the flying machine further comprises one or more computing devices for allowing the flying machine to learn new flying patterns.

14. A method for flying the flying machine of claim 1, wherein the wings are independently controlled and morphed such that wings can move freely in three-dimensional space.

15. The method according to claim 14, the flying machine has 11 degrees of freedom (DOF) and allows the use of evolutionary methods for teaching the flying machine to fly.

16. The method according to claim 14, wherein the up-stroke and down-stroke of wing flapping can be set to arbitrary values within the limits of the mechanism.

## Patentansprüche

1. Flugmaschine, umfassend
- einen Hauptkörper, ferner umfassend Steuerungen und Motoren zum Bewegen beweglicher Teile der Flugmaschine,
- gegenüberliegende Flügel, die schwenkbar gekoppelt sind und sich von dem Hauptkörper erstrecken, wobei jeder Flügel ferner drei Hauptteile umfasst, wobei die Hauptteile sind:
i) ein innerster Teil, der dem Humerus eines Flügels entspricht,
ii) ein mittlerer Teil, der dem Radius und der Ulna eines Flügels entspricht, und
iii) ein äußerster Teil, der dem Metacarpus, der basalen Phalanx und der Endphalanx eines Vogelflügels entspricht,
- wobei jeder Flügel ferner Handschwingen (1), Armschwingen (2) und tertiäre (Schirm-) Federn (3) umfasst, die durch die drei Hauptteile des Flügels getragen sind,
- einen Kopfabschnitt (16),
- einen Schwanzabschnitt, der Schwanzfedern (13) an einem Neigegelenk zum Bewegen des Schwanzes nach oben und unten, Neigen des Schwanzes zur Seite und Spreizen der Federn umfasst,
**dadurch gekennzeichnet, dass** jeder Flügel mit mindestens vier Motoren verbunden und separat durch diese gesteuert ist, wobei:
i) ein erster Motor das Schlagen des Flügels steuert,
ii) ein zweiter Motor den Anstellwinkel (Flügelneigung) steuert,
iii) ein dritter Motor den Grad an Verformung und Einfalten des Flügels steuert, und
iv) ein vierter Motor die horizontale Bewegung des Flügels steuert.

2. Flugmaschine nach Anspruch 1, wobei jede Handschwinge (1) und Armschwinge (2) aus einer oberen Platte und einer unteren Platte besteht, die dem Flügel eine Tragflächenprofilform verleihen, und wobei Hebel oder Träger die Richtung der Armschwingen steuern, wobei die Armschwingen parallel zur Richtung des Luftstroms gehalten werden.

3. Flugmaschine nach Anspruch 1, wobei die Federn an den Flügeln künstliche Federn sind, die eine obere und untere Platte aufweisen, die ihnen ermöglichen, in die angrenzende Feder eingefaltet und davon wieder abgespreizt zu werden.

4. Flugmaschine nach Anspruch 1, wobei die Schirmfedern aus einem Tuch, das sich dehnen kann, oder künstlichen Federn bestehen.

5. Flugmaschine nach Anspruch 1, wobei die Flügel und die Federn so ausgestaltet sind, dass die Armschwingen der Flügel mit dem Körper des Vogels und dadurch in der Bewegungsrichtung ausgerichtet werden können, wobei die oberen und unteren Platten der Armschwingen ihre Position relativ zur Bewegungsrichtung den gesamten Weg von einem voll ausgebreiteten Flügel zu dem eingefalteten Flügel beibehalten.

6. Flugmaschine nach Anspruch 1, wobei der Schwanzabschnitt durch drei Motoren gesteuert ist, wobei i) ein Motor die Auf- und Abbewegung steuert, ii) ein Motor die Neigung steuert; und iii) ein Motor das Spreizen der Schwanzfedern steuert.

7. Flugmaschine nach Anspruch 6, wobei die Motoren Servomotoren oder andere Elektromotoren sind.

8. Flugmaschine nach Anspruch 6, wobei die Motoren durch ein bordinternes Computersystem gesteuert werden, das eine Steuersoftware ausführt, die mindestens die Flügel- und Schwanzbewegungen, Kommunikationen und Sensoren steuert.

9. Flugmaschine nach Anspruch 7, wobei die Servomotoren und Positionssteuerungen zur Flügel- und Schwanzsteuerung ermöglichen, dass sich die Flügel und der Schwanz bei einer vorgegebenen Geschwindigkeit und Beschleunigung zu einer bestimmten vorgegebenen Position bewegen, die in Echtzeit durch das bordinterne Softwarebetriebssystem variiert werden kann.

10. Flugmaschine nach Anspruch 6, wobei der erste Motor, der das Schlagen der Flügel steuert, und der zweite Motor, der den Anstellwinkel (Flügelneigung) steuert, separat gesteuert werden.

11. Flugmaschine nach Anspruch 1, wobei die Motoren der Flugmaschine Winkelcodierer umfassen, die durch Positionssteuerungen der Servomotoren ausgelesen werden.

12. Flugmaschine nach Anspruch 1, wobei das elektrische System der Flugmaschine ferner Lagesensoren, ein Kommunikationssystem, eine Energiequelle, eine oder mehrere Kameras und andere Sensoren, wie etwa Umgebungssensoren, und ein Navigationssystem, wie etwa GPS, Lagesensoren, ein Gyroskop und einen Kompass, umfasst.

13. Flugmaschine nach Anspruch 1, wobei die Flugmaschine ferner eine oder mehrere Rechenvorrichtungen umfasst, um der Flugmaschine zu ermöglichen, neue Flugmuster zu erlernen.

14. Verfahren zum Fliegen einer Flugmaschine nach Anspruch 1, wobei die Flügel unabhängig gesteuert und verformt werden, so dass sich die Flügel frei im dreidimensionalen Raum bewegen können.

15. Verfahren nach Anspruch 14, wobei die Flugmaschine 11 Freiheitsgrade (DOF) aufweist und die Verwendung evolutionärer Verfahren ermöglicht, um der Flugmaschine das Fliegen beizubringen.

16. Verfahren nach Anspruch 14, wobei der Aufwärtsschlag und der Abwärtsschlag eines Flügelschlagens auf willkürliche Werte innerhalb der Grenzen des Mechanismus eingestellt werden kann.

## Revendications

1. Machine volante, comprenant :
- un corps principal comprenant en outre des contrôleurs et des moteurs pour mettre en mouvement des parties mobiles de la machine volante,
- des ailes opposées accouplées pivotantes au corps principal et s'étendant depuis celui-ci, chaque aile comprenant en outre trois parties principales, lesdites parties principales étant :
i) une partie la plus à l'intérieur correspondant à l'humérus d'une aile,
ii) une partie médiane correspondant au radius et à l'ulna d'une aile, et
iii) la partie la plus à l'extérieur correspondant au métacarpe, à la phalange basale et à la phalange terminale d'une aile d'un oiseau,
- chaque aile comprenant en outre des plumes primaires (1), secondaires (2) et tertiaires (3) supportées par les trois parties principales de l'aile,
- un tronçon de tête (16),
- un tronçon de queue, qui comprend des plumes de queue (13) sur une articulation d'inclinaison permettant d'élever et d'abaisser la queue, d'incliner la queue de côté et d'étaler les plumes,
**caractérisée en ce que** chaque aile est reliée à au moins quatre moteurs et commandée séparément par ceuxci,
i) un premier moteur commandant le battement de l'aile,
ii) un deuxième moteur commandant l'angle d'attaque (inclinaison de l'aile),
iii) un troisième moteur commandant le degré de transformation de la forme et de repliage de l'aile, et
iv) un quatrième moteur commandant le mouvement horizontal de l'aile.

2. Machine volante selon la revendication 1, dans laquelle chaque plume primaire (1) et secondaire (2) est constituée d'une plaque supérieure et d'une plaque inférieure conférant à l'aile la forme d'un profil aérodynamique, et dans laquelle des leviers ou des poutres commandent la direction des plumes secondaires pour maintenir les plumes secondaires parallèles à la direction de l'écoulement d'air.

3. Machine volante selon la revendication 1, dans laquelle les plumes sur les ailes sont des plumes artificielles pourvues d'une plaque supérieure et inférieure permettant de les replier en les rentrant dans la plume adjacente et de les étaler en les ressortant de celle-ci.

4. Machine volante selon la revendication 1, dans laquelle les plumes tertiaires sont constituées d'une étoffe extensible ou de plumes artificielles.

5. Machine volante selon la revendication 1, dans laquelle les ailes et les plumes sont conçues pour permettre aux plumes secondaires des ailes de s'aligner avec le corps de l'oiseau et donc avec la direction de déplacement, les plaques supérieures et inférieures des plumes secondaires conservant leur position, par rapport à la direction de déplacement, sur tout l'intervalle entre une aile complètement déployée et l'aile repliée.

6. Machine volante selon la revendication 1, dans laquelle le tronçon de queue est commandé par trois moteurs, i) un moteur commandant l'élévation et l'abaissement, ii) un moteur commandant l'inclinaison ; et iii) un moteur commandant l'étalement des plumes de queue.

7. Machine volante selon la revendication 6, dans laquelle les moteurs sont des servomoteurs ou d'autres moteurs électriques.

8. Machine volante selon la revendication 6, dans laquelle les moteurs sont commandés par un système ordinateur embarqué exécutant un logiciel de commande qui commande au moins les mouvements des ailes et de la queue, les communications et des capteurs.

9. Machine volante selon la revendication 7, dans laquelle les servomoteurs et des contrôleurs de positionnement pour la commande des ailes et de la queue permettent le mouvement des ailes et de la queue à une vitesse et une accélération données jusqu'à une certaine position donnée susceptible d'être modifiée en temps réel par le système d'exploitation logiciel embarqué.

10. Machine volante selon la revendication 6, dans laquelle le premier moteur commandant le battement des ailes et le deuxième moteur commandant l'angle d'attaque (inclinaison de l'aile) sont commandés séparément.

11. Machine volante selon la revendication 1, dans laquelle les moteurs de la machine volante comprennent des codeurs de position angulaire lus par des contrôleurs de positionnement de servomoteurs.

12. Machine volante selon la revendication 1, dans laquelle le système électrique de la machine volante comprend en outre des capteurs d'attitude, un système de communication, une source d'énergie, une ou plusieurs caméras et autres capteurs tels que des capteurs de conditions ambiantes et un système de navigation tel qu'un GPS, des capteurs d'attitude, un gyroscope et un compas.

13. Machine volante selon la revendication 1, la machine volante comprenant en outre un ou plusieurs dispositifs informatiques pour permettre à la machine volante d'apprendre de nouveaux schémas de vol.

14. Procédé pour faire voler la machine de vol selon la revendication 1, dans lequel les ailes sont commandées et leur forme est transformée de façon indépendante de façon à permettre un mouvement libre des ailes dans un espace à trois dimensions.

15. Procédé selon la revendication 14, dans lequel la machine volante possède 11 degrés de liberté (DOF) et permet l'utilisation de procédés évolutionnistes pour apprendre à la machine volante à voler.

16. Procédé selon la revendication 14, dans lequel la course ascendante et la course descendante du battement d'aile peuvent prendre des valeurs arbitraires dans les limites du mécanisme.
